# EUROPÄISCHE PATENTSCHRIFT

(11) **EP 3 218 290 B1**
(45) Veröffentlichungstag und Bekanntmachung des Hinweises auf die Patenterteilung: **06.02.2019**
(21) Anmeldenummer: 15790106.7
(22) Anmeldetag: 02.11.2015
(51) Int. Cl.: B65G 57/06, B65G 57/24

(54) **VERFAHREN UND ANORDNUNG ZUR BEFOERDERUNG VON ARTIKELN, STUECKGUETERN UND/ODER GEBINDEN INNERHALB WENIGSTENS ZWEIER FOERDERSTRECKENABSCHNITTE**
METHOD AND ARRANGEMENT FOR CONVEYING ARTICLES, PIECE GOODS AND/OR CONTAINERS WITHIN AT LEAST TWO CONVEYING PATH SECTIONS
PROCÉDÉ ET AGENCEMENT POUR LE TRANSPORT D'OBJETS, DE COLIS DE DÉTAIL ET/OU DE FÛTS DANS AU MOINS DEUX SECTIONS DE VOIE DE TRANSPORT

(30) Priorität: 14.11.2014 DE 102014223319
(43) Veröffentlichungstag der Anmeldung: 20.09.2017
(73) Patentinhaber: Krones Aktiengesellschaft, 93073 Neutraubling (DE)
(72) Erfinder: ESCHLBECK, Richard, 93073 Neutraubling (DE); KOLLMUSS, Manuel, 93073 Neutraubling (DE)
(74) Vertreter: Benninger, Johannes
(86) Internationale Anmeldenummer: PCT/EP2015/075455
(87) Internationale Veröffentlichungsnummer: WO 2016/074972

(56) Entgegenhaltungen:
- EP-A1- 0 498 263
- DE-B- 1 270 496
- GB-A- 1 599 046
- US-A- 5 844 807

## Beschreibung

Die vorliegende Erfindung betrifft eine Anordnung wenigstens zweier Förderstreckenabschnitte zur Beförderung von Artikeln, Stückgütern und/oder Gebinden und/oder von palettierfähigen Artikel-, Stückgut- und/oder Gebindelagen mit den Merkmalen des unabhängigen Anspruchs 1.

Die Erfindung betrifft zudem ein Verfahren zur Beförderung von Artikeln, Stückgütern und/oder Gebinden und/oder von palettierfähigen Artikel-, Stückgut- und/oder Gebindelagen innerhalb wenigstens zweier Förderstreckenabschnitte mit den Merkmalen des unabhängigen Verfahrensanspruchs 12.

Bei bekannten Verpackungs- und Palettieranlagen werden Artikel, Pakete und Stückgüter auf Transportspuren befördert und in geeigneter Weise verschoben oder ausgerichtet, um gewünschte Lagenbilder zu erzeugen, die anschließend zu Paletten gestapelt werden können.

EP 0 498 263 A1 beschreibt eine Anordnung nach dem Oberbegriff des Anspruchs 1. Aus der EP 1 046 598 A1 ist eine Vorrichtung zur Handhabung von Behälterpaketen wie Flaschen oder Blechdosen bekannt, mit der diese für einen Transport auf Paletten in einer vorbestimmten Konfiguration angeordnet werden sollen. Die Vorrichtung umfasst eine Station zum Ausrichten und Trennen der Pakete mit einer Vielzahl von parallelen Diagonalführungen auf, die jeweils mit verfahrbaren Greifelementen ausgestattet sind. Jedes der Greifelemente nimmt ein Paket auf und richtet es entsprechend einer gewünschten Anordnung oder Konfiguration der übrigen Pakete aus. Den Stationen werden die Pakete mittels eines Förderbandes in einer Reihe oder in mehreren Reihen zugeführt.

Auch die DE 603 13 039 T2 offenbart eine Vorrichtung und ein Verfahren zum Anordnen und Ausrichten von Paketen. Darüber hinaus ist aus der DE 102 19 129 A1 ein Verfahren und eine Vorrichtung zum Drehen und Verteilen oder Zusammenführen von sog. Packs bekannt, die in mindestens einer Zuteilbahn zugeführt und in mindestens einer zu der Zuteilbahn oder den Zuteilbahnen parallelen Auslaufbahn in einer um 90° gedrehten Anordnung abgeführt werden. Bei dem Verfahren werden jeweils mindestens zwei Packs erfasst und als Gruppe um jeweils 90° verdreht.

Um eine stapelbare Artikellage bilden zu können, ist grundsätzlich eine vordefinierte Anzahl an Artikeln notwendig, die gruppiert und zusammengeschoben werden müssen. Um die Gruppierleistung und die damit in direktem Zusammenhang stehende Palettierleistung erhöhen zu können, ist zusätzlich zu dem einen Zuführband der Gruppierstation ein weiteres, hierzu parallel angeordnetes Zuführband vorhanden. Die Gruppierstation bzw. dessen Steuerung kann vorzugsweise so programmiert sein, dass abwechselnd von dem ersten und mindestens einem weiteren Zuführband Artikel verschoben und/oder verdreht und an eine vorbestimmte Position versetzt werden. Es können auch mehrere solcher Gruppiertische hintereinander angeordnet sein, wobei dem ersten Gruppiertisch bspw. zwei Zuführbänder zugeordnet sind. Somit kann die Leistung nochmals dadurch erhöht werden, dass bspw. ein Artikel von dem ersten Zuführband durch den ersten Gruppiertisch bzw. dessen Manipulator positioniert wird und ein weiterer Artikel des zweiten Zuführbandes im freien Durchlauf den ersten Gruppiertisch passiert und von dem zweiten Gruppiertisch bzw. dessen Manipulator positioniert wird.

Bei bekannten Palettieranlagen und Verfahren zum Palettieren werden mindestens einem Gruppiertisch mit mindestens einem Manipulator mittels einer, zwei oder mehr paralleler Transportspuren ununterbrochene, lückenlose oder durch Lücken unterbrochene Reihen von Paketen, Stückgütern oder Gebinden zugeführt, die mittels des Manipulators bzw. der Manipulatoren in einer Weise gedreht und verschoben werden, dass sie eine stapel- und/oder palettierbare Lage bilden, welche dann anschließend zu einer Palettiervorrichtung zur Stapelung und/oder zur Lagenbildung überführt werden. Eine solche Palettiervorrichtung umfasst wenigstens eine Transferstation, die normalerweise einer Beladestation vorgeordnet ist und vorzugsweise vertikal verstellbar ist, um in Zusammenwirkung mit der Beladestation jeweils einzelne komplette Artikellagen auf eine gewünschte Höhe auf einem Stapelplatz wie bspw. einer Palette ablegen zu können. Auch können mehrere solcher Transferstationen hintereinander angeordnet sein, an welche sich schließlich in mindestens eine Beladestation anschließt. Da jede vertikale Bewegung der jeder Transferstation Zeit erfordert, bildet normalerweise nicht die eigentliche Palettierung den limitierenden Faktor für die Leistungsfähigkeit einer solchen Maschine, sondern die Überführung und vertikale Positionierung der Artikellagen von den Gruppierstationen zum eigentlichen Ablageplatz.

Das vorrangige Ziel der vorliegenden Erfindung wird darin gesehen, ein Verfahren und eine Vorrichtung zur Palettierung von Paketen, Stückgütern, Gebinden oder Artikeln zur Verfügung zu stellen, die eine erhöhte Leistung bei der Palettierung aufweist, d.h. die schneller palettieren kann als bisher bekannte Anlagen bzw. Verfahren.

Das genannte Ziel der Erfindung wird mit dem Gegenstand der unabhängigen Ansprüche erreicht. Merkmale vorteilhafter Weiterbildungen der Erfindung finden sich in den jeweiligen abhängigen Ansprüchen. So schlägt die Erfindung zur Erreichung des oben genannten Ziels eine Anordnung wenigstens zweier Förderstreckenabschnitte zur Handhabung und/oder Beförderung von Artikeln, Stückgütern und/oder Gebinden bzw. von palettierfähigen Artikel-, Stückgut- und/oder Gebindelagen vor, wobei die wenigstens zwei Förderstreckenabschnitte jeweils in Förderrichtung aufeinander folgende Handhabungsstationen, Gruppier- und/oder Transferstationen aufweisen und in einer integrierten und/oder gemeinsamen Beladestation münden, die einen gemeinsamen Beladeplatz zur Stapelung und/oder Palettierung der Artikel-, Stückgut- und/oder Gebindelagen übereinander umfasst. Dabei ist vorgesehen, dass der Beladestation wenigstens zwei vertikal verstellbare Auflage- und/oder Förderebenen zugeordnet sind, die Teile der jeweiligen Transferstationen der wenigstens zwei Förderstreckenabschnitte bilden oder die diesen in Förderrichtung nachgeordnet sind, oder die an die jeweiligen Transferstationen der wenigstens zwei vorhandenen Förderstreckenabschnitte anschließen. Außerdem ist vorgesehen, dass sich zwischen den vertikal verstellbaren Auflage- und/oder Förderebenen der Transferstationen der gemeinsame Beladeplatz befindet, der wechselseitig von den wenigstens zwei Auflage- und/oder Förderebenen mit zu palettierenden Artikel-, Stückgut- und/oder Gebindelagen beaufschlagbar ist.

Bei dieser Anordnung kann der Beladestation bzw. den der Beladestation vorgeordneten Transferstationen mit den wenigstens zwei vertikal verstellbaren Auflage- und/oder Förderebenen bspw. eine Hubwerksäule mit vertikal verstellbaren Führungseinrichtungen zum unabhängig voneinander durchführbaren Heben und Senken der wenigstens zwei Auflage- und/oder Förderebenen zugeordnet sein. Wahlweise sind auch andere Konfigurationen möglich, doch kann eine Hubwerksäule eine besonders kompakte und leistungsfähige Hebe- und/oder Fördermöglichkeit für die zu palettierenden Artikel-, Stückgut- und/oder Gebindelagen zur Verfügung stellen. Beim Einsatz einer solchen Hubwerksäule oder auch von zwei oder mehr Hubwerksäulen kann vorgesehen sein, dass die Auflage- und/oder Förderebenen über Zugmittel wie Riemen an der Hubwerksäule aufgehängt und motorisch an dieser vertikal beweglich angeordnet sind. Hierzu können z.B. an der Oberseite der Hubwerksäule Elektromotoren angeordnet sein, die als Antriebe für die heb- und senkbaren Auflage- und/oder Förderebenen dienen können.

Weiterhin ist es von Vorteil und für eine hohe Leistung der Anordnung günstig, wenn die wenigstens zwei Auflage- und/oder Förderebenen der Transferstationen mitsamt dem dazwischen befindlichen Beladeplatz in jeweiliger Transportrichtung annähernd miteinander fluchten. Wahlweise kann die Förderrichtung zumindest einer der zwei Auflage- und/oder Förderebenen zum Beladeplatz im Wesentlichen senkrecht zu einer Abförderrichtung eines fertig/vollständig palettierten Stapels mehrerer aufeinander abgelegter Artikel-, Stückgut- und/oder Gebindelagen orientiert sein. Typischerweise sind bei einer solchen Konfiguration die Förderrichtungen beider Auflage- und/oder Förderebenen zum Beladeplatz im Wesentlichen senkrecht zur Abförderrichtung eines fertig/vollständig palettierten Stapels mehrerer aufeinander abgelegter Artikel-, Stückgut- und/oder Gebindelagen orientiert.

Bei einer alternativen Anordnung können wahlweise die Förderrichtung wenigstens einer der Auflage- und/oder Förderebenen zum Beladeplatz im Wesentlichen parallel oder fluchtend zur Abförderrichtung eines fertig/vollständig palettierten Stapels mehrerer aufeinander abgelegter Artikel-, Stückgut- und/oder Gebindelagen orientiert sein. Auch hier kann die jeweils andere Förderrichtung ebenfalls parallel oder fluchtend zur Abförderrichtung orientiert sein. Ebenso möglich sind unterschiedliche Orientierungen, was bspw. bei räumlich beengten Maschinenumgebungen platzsparende und sehr flexible Konfigurationen ermöglicht.

Bei allen Varianten der erfindungsgemäßen Anordnung kann der Beladeplatz insbesondere wenigstens ein Horizontalförderelement aufweisen bzw. kann dem Beladeplatz wenigstens ein solches Horizontalförderelement zugeordnet sein, das zwischen den wenigstens zwei verstellbaren Auflage- und/oder Förderebenen oszillierend beweglich ist. Dieses wenigstens eine Horizontalförderelement kann sinnvollerweise durch eine umlaufende Mattenkette gebildet sein. Wahlweise kann das wenigstens eine Horizontalförderelement auch durch ein bewegliches Jalousieelement o. dgl. gebildet sein, ggf. ergänzt durch bewegliche Brems- und/oder Halteelemente, so dass überführte Artikel- oder Gebindelagen in ihren jeweiligen Lageformationen fixiert oder zusammengehalten werden können. Auch Überschubelemente wie von hinten angreifende Schubbalken können als Horizontalförderelemente eingesetzt werden. In diesem Fall weist die Auflageebene eine möglichst glatte und widerstandsarme Oberfläche auf, über die sich die zu palettierenden Lagen leicht schieben lassen. Darüber hinaus kann es bei vielen Konfigurationen sinnvoll sein, dem wenigstens einen Horizontalförderelement ein für zwei Überschubrichtungen wechselseitig nutzbares Anlageelement wie bspw. einen sog. Bremsbalken zur Abstützung von überschobenen Artikel-, Stückgut- und/oder Gebindelagen zuzuordnen. Ein solches Anlageelement bzw. ein solcher Bremsbalken kann effektiv verhindern, dass sich beim schnellen Überschieben oder bei einer schnellen Vorschubbewegung der Mattenkette oder des Jalousieelementes die Lagenformation auflöst oder dass sich die Artikel, Stückgüter oder Gebinde einer Lage leicht verschieben oder sogar umkippen.

Gemäß einer weiteren Ausführungsvariante der erfindungsgemäßen Anordnung kann dem Beladeplatz wenigstens eine Vorrichtung zum Einlegen von Zwischenlagen zwischen jeweils zwei aufeinander gestapelte Artikel-, Stückgut- und/oder Gebindelagen zugeordnet sein. Ein solcher sog. Zwischenlageneinleger kann im Bereich des Beladeplatzes angeordnet bzw. diesem räumlich zugeordnet sein. Als sog. Zwischenlageneinleger eignen sich bspw. bewegliche Arme, die an einem Drehpunkt gelagert sind, oder auch lineare Zuführsysteme, welche die Zwischenlagen von einem Stapel übernehmen und den auf dem Beladeplatz gestapelten Lagen jeweils zuführen, bevor eine weitere Lage auf der Oberseite des Stapels abgelegt wird.

Im Bereich der Förderstreckenabschnitte können jeweils unterschiedliche Handhabungs-, Gruppierungs-, Transferstationen und/oder Beladestationen o. dgl. hintereinander in Förderrichtung der Artikel, Stückgüter oder Gebinde angeordnet sein. So kann eine sinnvolle Anordnung bspw. vorsehen, dass in jedem der wenigstens zwei Förderstreckenabschnitte ein sog. Gruppiersystem vorhanden ist, das von einem, zwei oder mehr Zuförderbändern oder dgl. Horizontalfördereinrichtungen mit zu gruppierenden Artikeln, Stückgütern oder Gebinden beschickt wird, wobei ein solches Gruppiersystem insbesondere jeweils eine Handhabungsstation umfassen kann, die mit Greifern ausgestattet ist. Diese Greifer können bspw. über Portalsteuerungen verfügen, die innerhalb eines gegebenen Bewegungsraumes jeweils horizontale Bewegungen und vertikale Bewegungen ausführen können, um die ein- oder zweibahnig zugeführten Artikel, Stückgüter oder Gebinde in eine gewünschte Gruppierungsordnung zu bringen. Ebenso möglich sind Greifersteuerungen mit Knickarmrobotern. Typischerweise sind bei einer zweibahnigen Zuführung der Artikel, Stückgüter oder Gebinde jeweils mindestens zwei unabhängig voneinander bewegliche Greifersysteme sinnvoll. Wahlweise können auch jeweils zwei oder drei solcher Handhabungssysteme innerhalb jedes Gruppiersystems unmittelbar hintereinander angeordnet sein, was die Gruppiergeschwindigkeit bei schneller Zuführung der Artikel, Stückgüter oder Gebinde steigern kann. Im Wesentlichen sorgen die Handhabungsstationen für die Drehung und/oder Verschiebung einzelner, mehrerer oder auch von allen angeförderten Artikeln, Stückgütern oder Gebinden in eine gewünschte räumliche Ordnung zueinander, bevor sie in einer nachfolgenden Vorgruppierstation aufgestaut und/oder seitlich aneinander geschoben bzw. seitlich zentriert werden, so dass jeweils komplette Lagen ohne dazwischen befindliche Lücken zwischen den einzelnen, aneinandergeschobenen Artikeln, Stückgütern oder Gebinden gebildet werden, die in den jeweiligen Förderstreckenabschnitten in linearer Förderrichtung zur nächsten Station weitertransportiert werden. Üblicherweise werden diese aufeinander folgenden Stationen -die Handhabungsstation sowie die Vorgruppierungsstationen mit ihren Staubalken und seitlichen Zentrierleisten - als Gruppiersysteme bezeichnet, die einzeln hintereinander angeförderte Artikel, Stückgüter oder Gebinde, die von den Zuführbändern in die Handhabungsstation gefördert werden, zu kompletten, palettierfähigen Lagen überführen.

Diesen Gruppiersystemen folgen in Förderrichtung unmittelbar die sog. Palettiersysteme oder Palettierstationen, die wenigstens eine sog. Transferstation aufweisen, die für einen Weitertransport der mittels des Gruppiersystems komplettierten Artikel-, Stückgut- oder Gebindelage zu einer nachgeordneten Beladestation sorgt. Gemäß der vorliegenden Erfindung wird eine einzige gemeinsame Beladestation von wenigstens zwei separaten und jeweils vollständigen Förderstreckenabschnitten mit eigenem Gruppiersystem und Transferstation gespeist. Wahlweise kann die Beladestation mittig zwischen zwei parallel nebeneinander verlaufenden Förderstreckenabschnitten angeordnet sein, so dass die zu stapelnden und/oder zu palettierenden Artikel-, Stückgut- oder Gebindelagen zwischen der Transferstation und der Beladestation eine Richtungsänderungen von 90 Grad ausführen. Ebenso möglich sind jedoch auch fluchtende Anordnungen, bei der die Beladestation mittig zwischen zwei linear aufeinander zu verlaufenden Förderstreckenabschnitten angeordnet ist, so dass die zu stapelnden und/oder zu palettierenden Artikel-, Stückgut- oder Gebindelagen zwischen der Transferstation und der Beladestation keine Richtungsänderung ausführen, sondern erst bei der Überführung von der Beladestation auf einen Ablage- und Stapelplatz wie bspw. einer Palette eine Richtungsänderung von 90 Grad gegenüber den ursprünglichen Förderrichtungen ausführen.

Die sich an die Gruppiersysteme jeweils anschließenden Palettierstationen können bspw. wie folgt aufgebaut sein. So kann z.B. eine gemeinsame Hubwerksäule vorgesehen sein, an der zu beiden Seiten (bei parallelen Verläufen der Förderstreckenabschnitte) jeweils eine vertikal bewegliche Transferstation angeordnet ist. Wahlweise können auch zwei solcher vertikal beweglicher Transferstationen hintereinander für jeden der wenigstens zwei Förderstreckenabschnitte vorgesehen sein, die anschließend in Förderrichtung auf die gemeinsame Beladestation münden, die ebenfalls vertikal beweglich ist. Die insgesamt zwei oder vier vertikal beweglichen Transferstationen sowie die vertikal bewegliche Beladestation sind jeweils unabhängig voneinander in der Höhe verstellbar und verfahrbar und können wahlweise an einer gemeinsamen Hubwerksäule oder auch an zwei nebeneinander stehenden Hubwerksäulen aufgehängt sein.

Die sich an die Transferstationen der wenigstens zwei Förderstreckenabschnitte anschließende Beladestation weist geeignete Fördermittel auf, um die zu stapelnden und/oder zu palettierenden Artikel-, Stückgut- oder Gebindelagen von den Transferstationen auf die Beladestation zu überführen. So kann die Beladestation z.B. in einer Weise aufgebaut sein, dass eine zweigeteilte Jalousie unterhalb des jeweiligen Lagenpuffers verweilen kann. Die Jalousie wird also beim Ablegen einer Lage in eine Position unterhalb der Lagenpuffer (links und rechts) angeordnet. Der Lagenpuffer an sich kann aus einer Platte oder einer angetriebenen Mattenkette bestehen. Diese sind jeweils ebenso unabhängig voneinander antreibbar. Bei Ausführung als Platte ist ein Schub- und Gegenhaltesystem notwendig, um die Lage vom Lagenpuffer auf die Beladestation zu überführen. Ein als Gegenhalter fungierender Bremsbalken kann wechselseitig wirkend mittig angeordnet sein.

Am Beladeplatz kann bspw. eine Palette stehen, auf die mehrere Lagen der Artikel, Stückgüter und/oder Gebinde gestapelt werden. Sollen zwischen einzelne Lagen oder auch zwischen alle Lagen zusätzliche Zwischenlagen eingelegt werden, so ist ein sog. Zwischenlageneinleger erforderlich, der im unmittelbaren Nahbereich des Beladeplatzes aufzustellen ist. Seine Bewegungssteuerung muss auf die Steuerung und Bewegungsabläufe der Beladestation abgestimmt sein, damit das Einlegen von Zwischenlagen ohne Verzögerung des Palettierprozesses erfolgen kann.

Sämtliche Stationen der erfindungsgemäßen Anordnung können wahlweise mit Transportmitteln wie z.B. Mattenketten oder umlaufenden Fördermitteln oder mit gleitenden Oberflächen (Tische) und entsprechenden Schubmitteln versehen sein. Die Lagen können somit entweder aktiv mittels eines Manipulators verschoben werden oder aber auch mittels des Fördermittels selbst oder in Kombination. Darüber hinaus kann eine Variante eingesetzt werden, bei der die Zwischenlagen in einer geeigneten Weise auf die Lagen am Lagenpuffer in Form eines Klebepunktes angehaftet werden.

Neben der oben beschriebenen erfindungsgemäßen Anordnung umfasst die vorliegende Erfindung ein Verfahren zur Beförderung von Artikeln, Stückgütern und/oder Gebinden und/oder von palettierfähigen Artikel-, Stückgut- und/oder Gebindelagen innerhalb wenigstens zweier Förderstreckenabschnitte in jeweiliger Förderrichtung mittels aufeinander folgender Handhabungs-, Gruppier- und/oder Transferstationen, die in einer integrierten und/oder gemeinsamen Beladestation münden, in welcher in oder auf einem gemeinsamen Beladeplatz die Artikel-, Stückgut- und/oder Gebindelagen übereinander gestapelt und/oder palettiert werden. Der Beladestation sind wenigstens zwei vertikal verstellbare Auflage- und/oder Förderebenen zugeordnet und/oder vorgeordnet, die Teile der jeweiligen Transferstationen der wenigstens zwei vorhandenen Förderstreckenabschnitte bilden bzw. diesen zugeordnet sind. Außerdem befindet sich zwischen den vertikal verstellbaren Auflage- und/oder Förderebenen der Transferstationen der gemeinsame Beladeplatz, der wechselseitig von den wenigstens zwei Auflage- und/oder Förderebenen der Transferstationen mit zu palettierenden Artikel-, Stückgut- und/oder Gebindelagen beaufschlagt wird. Wahlweise können dabei die beiden Förderstreckenabschnitte miteinander fluchten und sich mit gegensinnig orientierten Förderrichtungen für die Artikel, Stückgüter und/oder Gebinde bzw. für die Gruppierungen oder Artikel-, Stückgut- und/oder Gebindelagen mittig in der Beladestation treffen. Ebenso möglich ist eine Variante, bei der die beiden Förderstreckenabschnitte ungefähr parallel oder in spitzem Winkel zueinander verlaufen und sich mit gleichsinnig orientierten bzw. schräg aufeinander zu bewegend orientierten Förderrichtungen für die Artikel, Stückgüter und/oder Gebinde bzw. für die Gruppierungen oder Artikel-, Stückgut- und/oder Gebindelagen endseitig in der Beladestation treffen. Auch Mischvarianten mit nicht parallel verlaufenden Förderstreckenabschnitten und nicht exakt fluchtenden Förderstreckenabschnitten, die in variablen Winkeln zueinander ausgerichtet sein können, sind möglich.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Draufsicht auf eine erste Ausführungsvariante einer erfindungsgemäßen Anordnung, bestehend aus wenigstens zwei parallel verlaufenden Förderstreckenabschnitten, die jeweils der Beförderung von Artikeln, Stückgütern und/oder Gebinden sowie deren Zusammenfassung und Zusammenstellung zu palettierfähigen Lagen dienen.
Fig. 2 zeigt eine schematische Draufsicht auf eine zweite Ausführungsvariante der erfindungsgemäßen Anordnung, die mit einer Einrichtung zur Zuführung von Zwischenlagen ausgestattet ist.
Fig. 3 zeigt eine schematische Draufsicht auf eine dritte Ausführungsvariante der erfindungsgemäßen Anordnung, die mit einer alternativen Einrichtung zur linearen Zuführung von Zwischenlagen ausgestattet ist.
Fig. 4 zeigt eine schematische Vorderansicht einer Palettierstation, die einen Teil der erfindungsgemäßen Anordnung gemäß Fig. 1, 2 und/oder 3 bildet.
Fig. 5 zeigt eine schematische Draufsicht auf eine vierte Ausführungsvariante der erfindungsgemäßen Anordnung, bestehend aus zwei in fluchtender Anordnung verlaufenden Förderstreckenabschnitten, die sich an einer gemeinsamen Palettierstation treffen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

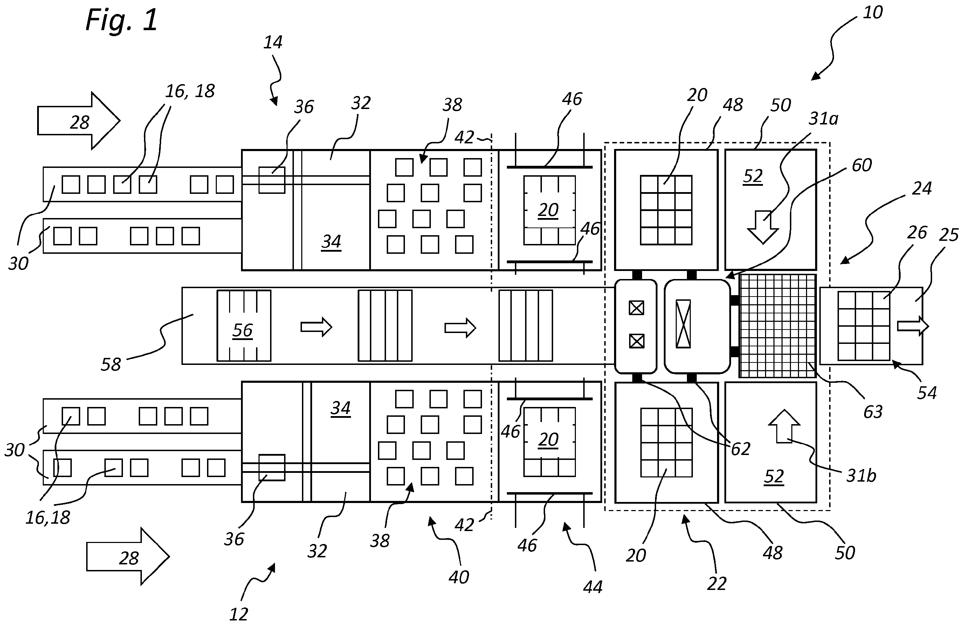

Die schematische Draufsicht der Fig. 1 verdeutlicht eine mögliche Konfiguration einer ersten Ausführungsvariante einer erfindungsgemäßen Förder-, Gruppier- und/oder Palettieranordnung 10, die als zentrale Bestandteile zwei parallel verlaufende Förderstreckenabschnitte 12 und 14 umfasst, die jeweils der Beförderung von Artikeln 16, Stückgütern und/oder Gebinden 18 sowie deren Zusammenfassung und Zusammenstellung zu palettierfähigen Lagen 20 dienen, und die in eine gemeinsame Palettiereinheit 22 münden, die im gezeigten Ausführungsbeispiel der Fig. 1 am rechten Rand der Palettieranordnung 10 mit unterbrochener Linie umrahmt dargestellt ist. Wichtiger Bestandteil der Palettiereinheit 22 oder dieser gemeinsamen Palettierstation ist eine zentrale Beladestation 24, die für eine Stapelung und Palettierung der jeweiligen Artikel- oder Gebindelagen 20 auf einem einzigen, gemeinsamen Beladeplatz 25 zu einem gemeinsamen Stapel 26 aus übereinander geschichteten Lagen 20 sorgt. Der Stapel 26 kann je nach Bedarf unterschiedlich hoch ausfallen.

Wie es die Fig. 1 beispielhaft erkennen lässt, weist jeder der beiden vorhandenen Förderstreckenabschnitte 12 und 14 in jeweiliger, zueinander paralleler Förderrichtung 28 aufeinander folgende Handhabungs-, Gruppier-, Transfer- und/oder Beladestationen auf, die in der integrierten und/oder gemeinsamen Palettierstation 22 mit ihrer Beladestation 24 münden. Jeweils zwei parallele Transport- oder Zuführbänder 30 zur horizontalen Beförderung der Artikel 16, Stückgüter und/oder Gebinde 18 in Förderrichtung 28 münden bei jedem der beiden Förderstreckenabschnitte 12 und 14 in einer ersten Handhabungsstation 32, mit der die Artikel 16, Stückgüter und/oder Gebinde 18 auf einer Auflageebene 34 verschoben und/oder gedreht werden, was bspw. mittels eines Portalgreifsystems 36 erfolgen kann, das schnelle Greif-, Verschiebe- und Drehbewegungen in alle Richtungen innerhalb des Umrisses der Auflageebene 34 der ersten Handhabungsstation 32 erlaubt, um die mit den Zuführbändern 30 regelmäßig oder unregelmäßig, beabstandet voneinander oder lückenlos angeförderten Artikel 16, Stückgüter und/oder Gebinde 18 in der gewünschten Weise drehen und/oder verschieben zu können, so dass im Bereich einer ersten Vorgruppierstation 40, die sich der ersten Handhabungsstation 32 jeweils anschließt, Gruppierungen 38 entstehen, die dort oder in einer sich anschließenden zweiten Vorgruppierstation 44 zu Artikel- oder Gebindelagen 20 zusammengeschoben und verdichtet werden können. Anstelle der im Bereich der ersten Handhabungsstationen 32 jeweils angedeuteten Portalgreifsysteme 36, die mit innerhalb der Auflageebenen 34 verschiebbaren und damit parallel zur Förderrichtung 28 und quer dazu beweglichen und vertikal heb- und senkbaren Greifern ausgestattet sein können, können wahlweise auch Robotergreifer o. dgl. als Handhabungssysteme eingesetzt werden, die bspw. an den Seiten der Auflageebenen 34 stehen und insbesondere durch Mehrachsroboter gebildet sein können.

Die noch unregelmäßig voneinander beabstandeten Artikel 16 oder Gebinde 18 der auf diese Weise angeordneten Gruppierungen 38 werden weiter in Förderrichtung 28 bewegt und in einer der Handhabungsstation 32 jeweils nachgeordneten ersten Vorgruppierstation 40 mittels eines Staubalkens 42 o. dgl. geeigneter Einrichtung zumindest um einen geringen Weg aufgestaut, so dass die Abstände zwischen den Artikeln 16 oder Gebinden 18 der jeweiligen Gruppierungen 38 in Förderrichtung 28 reduziert oder beseitigt werden. In der in Förderrichtung 28 jeweils der ersten Vorgruppierstation 40 nachgeordneten zweiten Vorgruppierstation 44 wirken seitlich angreifende, jeweils quer zur Förderrichtung 28 bewegliche Schubbalken 46 von beiden Seiten auf die Gruppierungen 38 ein, so dass auch die Abstände quer zur Förderrichtung 28 reduziert oder beseitigt werden, wodurch regelmäßige Artikel- oder Gebindelagen 20 mit lückenlos aneinander stehenden Artikeln 16 oder Gebinden 18 gebildet werden, die je nach Größe und Kontur der Artikel 16 oder Gebinde 18 und je nach Gruppierungsanordnung 38 einen rechtecktförmigen oder quadratischen Umriss aufweisen können.

Als Staubalken 42 in der ersten Vorgruppierstation 40 genügt normalerweise ein vor der Gruppierung 38 absenkbarer oder von unterhalb der Auflageebene 34 und zwischen den Stationen 40 und 44 auftauchender und absenkbarer Balken, da die Auflageebenen 34 in den aufeinander folgenden Stationen 32, 40 und 44 normalerweise als bewegliche Förderebenen ausgebildet sind, bspw. als endlos umlaufende Mattenketten o. dgl.

Im gezeigten Ausführungsbeispiel der Fig. 1 umfasst die Palettierstation 22 insgesamt vier Transferstationen 48 und 50, wobei jeweils zwei in Förderrichtung 28 hintereinander angeordnete Transferstationen 48 und 50 einen Teil jedes der beiden Förderstreckenabschnitt 12 bzw. 14 bilden. Allerdings ist zu betonen, dass die beiden den zweiten Vorgruppierstationen 44 nachgeordneten ersten Transferstationen 48 an beiden Seiten der Palettierstation 22 jeweils unabhängig voneinander in vertikaler Richtung beweglich sind. Dagegen sind die den ersten Transferstationen 48 in Förderrichtung 28 nachgeordneten zweiten Transferstationen 50 zwar ebenfalls vertikal beweglich, doch nicht unabhängig voneinander, sondern nur gemeinsam. Da sie mechanisch mit der zentralen Beladestation 24 verbunden sind, die mittig zwischen den beiden zweiten Transferstationen 50 angeordnet ist, sind sie auch nur gemeinsam mit dieser Beladestation 24 in der Höhe verstellbar. Sie bilden dadurch jeweils Unterstützungsebenen für die Beladestation 24.

Jede der insgesamt vier ersten bzw. zweiten Transferstationen 48 und 50 weist jeweils eine vertikal verstellbare Auflage- und/oder Förderebene 52 zur Förderung der Lagen 20 auf unterschiedlichen und verstellbaren Höhenniveaus auf. Die jeweils ersten Transferstationen 48 schließen jeweils an die jeweiligen zweiten Vorgruppierstationen 44 der beiden Förderstreckenabschnitte 12 bzw. 14 an. An die ersten Transferstationen 48 schließen sich die jeweiligen zweiten Transferstationen 50 an, welche gleichzeitig die Unterstützungsebenen für die zentrale Beladestation 24 bilden. Außerdem ist vorgesehen, dass sich zwischen den gemeinsam vertikal verstellbaren Auflage- und/oder Förderebenen 52 der gemeinsam mit den Auflage- und/oder Förderebenen 52 variabel in der Höhe verstellbare Beladeplatz 24 befindet, der wechselseitig von den wenigstens zwei Auflage- und/oder Förderebenen 52 der zweiten Transferstationen 50 mit zu palettierenden Artikel-, Stückgut- und/oder Gebindelagen 20 beaufschlagbar ist. Auf den Auflage- und/oder Förderebenen 52 der als Unterstützungsebenen für die Beladestation 24 fungierenden zweiten Transferstationen 50 ändert sich somit jeweils die Förder- bzw. Überschubrichtung 31 a bzw. 31 b für die darauf stehenden Gebinde- oder Artikellagen 20 in Richtung zur zentralen Beladestation 24, wobei die Förderrichtungen 31a und 31b jeweils senkrecht zu der ursprünglichen Förderrichtung 28 orientiert und aufeinander zu gerichtet sind.

An die Beladestation 24 schließt sich in einer Richtung senkrecht zu den Überschubrichtungen 31a bzw. 31b und parallel zur Förderrichtung 28 ein Beladeplatz 25 an. Auf dem Beladeplatz 25 kann bspw. eine wechselbare Palette 54 stehen, auf der jeweils ein Stapel 26 mit mehreren übereinander gestapelten Lagen 20 abgestellt werden kann. Wenn ein Stapel 26 eine vorgegebene Höhe erreicht hat, kann die Palette 54 mitsamt dem darauf befindlichen Stapel 26 entnommen und durch eine weitere Leerpalette 56 ersetzt werden, die bspw. von einem weiteren Zuführband 58, das zwischen den beiden Förderstreckenabschnitten 12 und 14 und mit einer Förderrichtung parallel zu diesen verlaufen kann, heranbefördert werden kann.

Bei der gezeigten Anordnung 10 ist die Beladestation 24, die einen zentralen Bestandteil der Palettierstation 22 bildet, mit den insgesamt vier vertikal verstellbaren Auflage- und/oder Förderebenen 52 mit einer Hubwerksäule 60 mit vertikal verstellbaren Führungseinrichtungen 62 zum unabhängig voneinander durchführbaren Heben und Senken der Transferstationen 48 und 50 mit ihren Auflage- und/oder Förderebenen 52 ausgestattet. Zwar sind auch andere Konfigurationen zur Sicherstellung der vertikalen Beweglichkeit der Auflage- und/oder Förderebenen 52 der ersten und zweiten Transferstationen 48 und 50 möglich, doch liefert die gezeigte Hubwerksäule 60 eine besonders kompakte und leistungsfähige Hebe- und/oder Fördermöglichkeit für die zu palettierenden Artikel-, Stückgut- und/oder Gebindelagen 20. Beim Einsatz dieser Hubwerksäule 60 ist vorgesehen, dass die Auflage- und/oder Förderebenen 52 über Zugmittel wie Riemen an der Hubwerksäule 60 aufgehängt und motorisch an dieser vertikal beweglich angeordnet sind, insbesondere über geeignete vertikale Schlittenführungen o. dgl. Hierzu können z.B. an der Oberseite der Hubwerksäule 60 Elektromotoren angeordnet sein, die als Antriebe für die heb- und senkbaren Auflage- und/oder Förderebenen 52 dienen können.

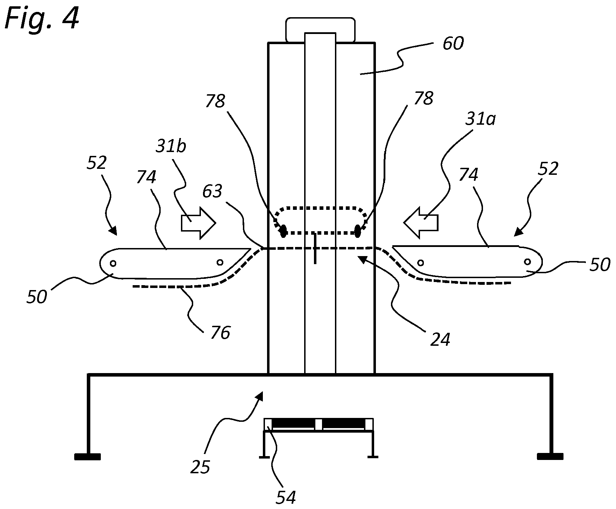

Wie in Fig. 1 gezeigt, können wahlweise mehrere Hubwerksäulen 60 zum Heben und Senken der Auflageebenen der Palettierstation 22 vorgesehen sein. Im gezeigten Ausführungsbeispiel sind insgesamt drei voneinander unabhängig durchführbare Vertikalbewegungen möglich, nämlich die beiden unabhängig voneinander durchführbaren Hebe- und Senkbewegungen der beiden ersten Transferstationen 48 der ersten bzw. zweiten Förderstreckenabschnitte 12 bzw. 14 sowie die wiederum unabhängig davon durchführbaren Hebe- und Senkbewegungen der beiden zweiten Transferstationen 50 mitsamt der dazwischen angeordneten Auflageebene 63 der Beladestation 24. Diese insgesamt drei Auflageebenen 52 und 63 der zweiten Transferstationen 50 bzw. der dazwischen angeordneten Beladestation 24 bleiben bei ihren Hebe- und Senkbewegungen jeweils auf demselben Höhenniveau, was anhand der schematischen Draufsicht der Fig. 4 noch näher verdeutlicht wird.

Um eine problemlose Verschiebung von kompletten Artikel- oder Gebindelagen 20 mittels der beweglichen Auflageflächen 52 in den Überschubrichtungen 31a bzw. 31b von den zweiten Transferstationen 50 und die Überführung der Lage von der Beladestation 24 auf den Beladeplatz 25 zu ermöglichen, erfolgen die Vertikalbewegungen der beiden zweiten Transferstationen 50 synchron zueinander, so dass hierfür ein einziger Antrieb an der Hubwerksäule 60 ausreicht. Die horizontal beweglichen und/oder mit Überschubeinrichtungen ausgestatteten Auflageebenen 52 zum wechselseitigen Überschieben von Lagen 20 auf die Auflagefläche 63 der Beladestation 24 dienen der Überführung von kompletten Artikel- oder Gebindelagen 20 von jeweils einer der beiden linken oder rechten Auflageebenen 52 der jeweiligen zweiten Transferstationen 50 der beiden Förderstreckenabschnitte 12 oder 14. Nachdem die Lage 20 mittels der entsprechend beweglichen Auflageflächen 52 oder der hier nicht dargestellten Überschubelementen mittig zwischen den beiden zweiten Transferstationen 50 platziert wurde, kann sie mittels geeigneter Überschubeinrichtungen (nicht dargestellt) wie bspw. einem Schieber parallel zur Förderrichtung 28 auf die Palette 54 überführt werden, die auf dem Beladeplatz 25 steht, und zwar zuoberst einer dort bereits zuvor abgelegten Lage 20.

Als Horizontalantriebe für die auf den Transferstationen 48 und/oder 50 befindlichen und in Förderrichtung 28 zu bewegenden und an die jeweils folgenden Stationen zu übergebenden Lagen 20 können bspw. Schubbalkensysteme dienen. Alternativ eignen sich auch angetriebene Mattenketten, auf denen die Lagen 20 stehen.

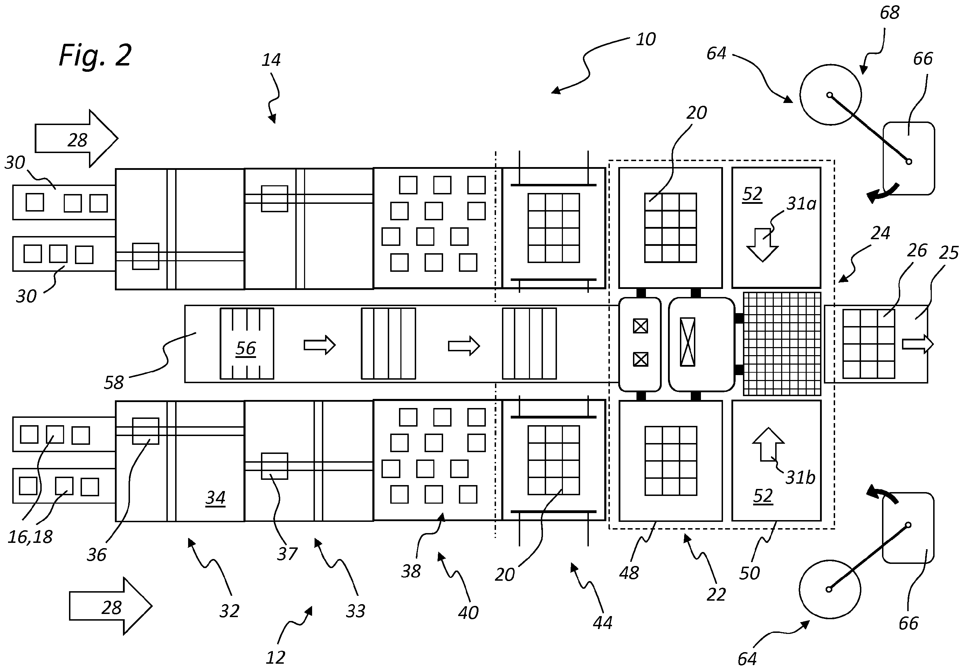

Die Fig. 2 zeigt eine weitere schematische Draufsicht auf eine zweite Ausführungsvariante der erfindungsgemäßen Förder-, Gruppier- und/oder Palettieranordnung 10, die mit zusätzlichen Einrichtungen 64 zur Zuführung von Zwischenlagen zum Beladeplatz 25 ausgestattet ist. Die Zwischenlagen 66 werden jeweils mit drehbar beweglichen Handhabungseinrichtungen 68 wie Greifern o. dgl. von Zwischenlagenstapeln abgenommen und auf jede einzelne abgelegte Lage 20 auf dem Stapel 26 oder wahlweise auch auf jede zweite oder dritte Lage 20 abgelegt, wodurch der Stapel 26 mechanisch stabilisiert und die einzelnen Artikel 16 oder Gebinde 18 am Verrutschen oder Kippen gehindert werden. Im übrigen Förderablauf entspricht die in Fig. 2 gezeigte Anordnung 10 weitgehend der in Fig. 1 gezeigten Anordnung. Wenn somit in der folgenden Figurenbeschreibung zur Fig. 2 auf einzelne Details oder mit Bezugsziffern bezeichnete Elemente nicht gesondert hingewiesen ist, so bestehen dahingehend keine Unterschiede zur Variante gemäß Fig. 1, weshalb in diesen Fällen auf die obige Beschreibung zur Fig. 1 zu verweisen ist.

Wie dort (vgl. Fig. 1) weist jeder der beiden vorhandenen Förderstreckenabschnitte 12 und 14 in Förderrichtung 28 aufeinanderfolgende Handhabungs-, Gruppier-, Transfer- und/oder Beladestationen auf, die in der integrierten und/oder gemeinsamen Palettierstation 22 münden. Jeweils zwei parallele Transport- oder Zuführbänder 30 zur horizontalen Beförderung der Artikel 16, Stückgüter und/oder Gebinde 18 in Förderrichtung 28 münden bei jedem der beiden Förderstreckenabschnitte 12 und 14 in einer ersten Handhabungsstation 32, mit der die Artikel 16, Stückgüter und/oder Gebinde 18 auf einer Auflageebene 34 verschoben und/oder gedreht werden, bspw. mit einem Portalgreifsystem 36, das schnelle Greif-, Verschiebe- und Drehbewegungen in alle Richtungen innerhalb des Umrisses der Auflageebene 34 erlaubt, um die mit den Zuführbändern 30 regelmäßig oder unregelmäßig, beabstandet voneinander oder lückenlos angeförderten Artikel 16, Stückgüter und/oder Gebinde 18 in der gewünschten Weise drehen und verschieben zu können, so dass jeweils Gruppierungen 38 entstehen, die anschließend zu Artikel- oder Gebindelagen 20 zusammengeschoben und verdichtet werden können. Der ersten Handhabungsstation 32 ist unmittelbar eine zweite Handhabungsstation 33 nachgeordnet, der wiederum die ersten und zweiten Vorgruppierstationen 40 und 44 folgen bzw. nachgeordnet sind. Der weitere Aufbau und die übrige Konfiguration unterscheiden sich nicht von der in Fig. 1 gezeigten Konfiguration der Anordnung 10.

Die in Fig. 2 gezeigten ersten und zweiten Handhabungsstationen 32 und 33, die unmittelbar aufeinander folgen, können bei einer großen Artikel- oder Gebindedichte, die in schneller Folge auf den Zuführ- oder Transportbändern 30 zugeführt werden, für eine schnellere Gruppierung der Artikel 16, Stückgüter oder Gebinde 18 sorgen, da einige der zu drehenden und/oder zu verschiebenden Artikel 16, Stückgüter oder Gebinde 18, die die erste Handhabungsstation 32 ohne Einwirkung passieren, unmittelbar vom Portalgreifsystem 37 der zweiten Handhabungsstation 33 erfasst und verschoben und/oder gedreht werden können. Auf diese Weise lassen sich bei gleichbleibender Fördergeschwindigkeit der Zuführbänder 30 die Verarbeitungsgeschwindigkeit und der Durchsatz der gesamten Anordnung steigern.

Wiederum können auch bei der in Fig. 2 gezeigten Variante anstelle der angedeuteten Portalgreifsysteme 36 und 37, die jeweils mit einem heb- und senkbaren Greifer ausgestattet sind, der jeweils parallel zur Förderrichtung 28 und quer dazu beweglich ist, wahlweise auch Robotergreifer o. dgl. als Handhabungssysteme eingesetzt werden, die bspw. an den Seiten der Auflageebenen 34 stehen und z.B. durch Mehrachsroboter gebildet sein können.

Der Vollständigkeit halber sei darauf hingewiesen, dass auch bei der Variante gemäß Fig. 1 zwei, drei oder mehr aufeinander folgende Handhabungsstationen 32 und 33 vorgesehen sein können, auch wenn dies in der obigen Beschreibung zur Fig. 1 nicht gesondert erwähnt wurde.

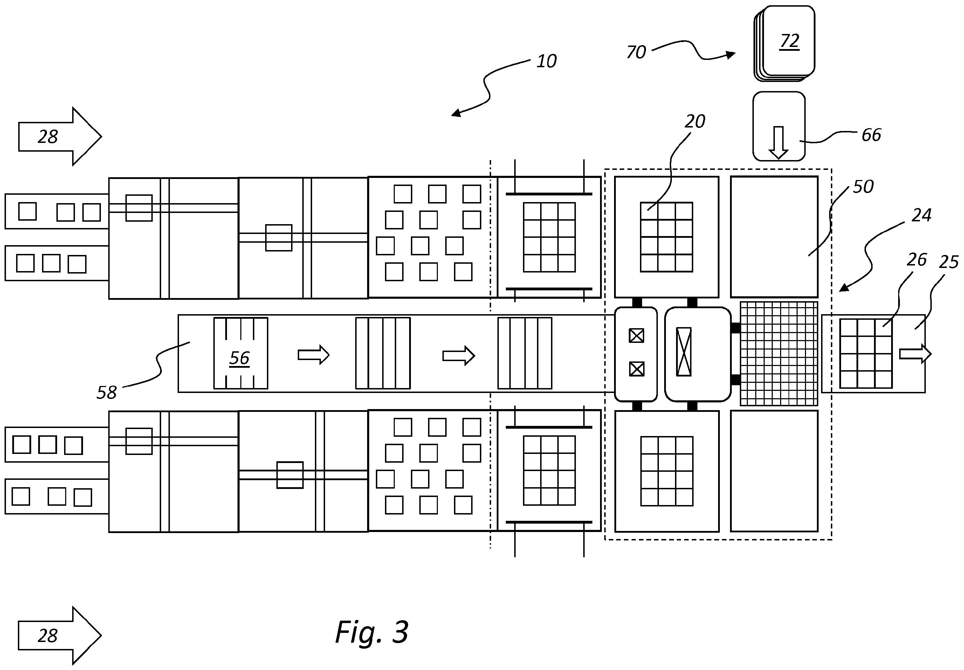

Die Fig. 3 zeigt eine schematische Draufsicht auf eine dritte Ausführungsvariante der erfindungsgemäßen Anordnung 10, die mit einer alternativen Handhabungseinrichtung 70 zur linearen Zuführung von Zwischenlagen 66 zum Beladeplatz 25 ausgestattet ist. Hierbei werden die Zwischenlagen 66 vorzugsweise von wenigstens einem Zwischenlagenstapel 72 abgenommen und einzeln dem auf dem Beladeplatz 25 stehenden Stapel 26 zugeführt, so dass auf jede Lage 20 oder jede zweite oder dritte Lage 20 jeweils eine Zwischenlage 66 aufgelegt wird. Im übrigen Förderablauf entspricht die in Fig. 3 gezeigte Anordnung 10 weitgehend der in Fig. 2 gezeigten Anordnung 10. Wahlweise können von beiden Seiten Zwischenlagen 66 mit jeweils linear arbeitenden Handhabungseinrichtungen 70 zugeführt werden, wenn bspw. die gruppierten und auf den zweiten Transferstationen 50 befindlichen Artikel- oder Gebindelagen 20 bereits dort mit einzelnen Zwischenlagen 66 versehen werden sollen, bevor sie auf dem gemeinsamen Stapel 26 abgelegt werden.

Auch hier sei erwähnt, dass in der obigen Figurenbeschreibung zur Fig. 3 nicht auf alle Details oder mit Bezugsziffern bezeichnete Elemente jeweils gesondert hingewiesen wurde; insofern bestehen keine Unterschiede zur Variante gemäß Fig. 1 oder zur Variante gemäß Fig. 2, weshalb in diesen Fällen auf die obigen Beschreibungen zur Fig. 1 bzw. zur Fig. 2 zu verweisen ist. Der Vollständigkeit halber sei darauf hingewiesen, dass auch bei der Variante gemäß Fig. 3 zwei, drei oder mehr aufeinander folgende Handhabungsstationen 32 und 33 vorgesehen sein können.

Die Fig. 4 zeigt eine schematische Vorderansicht einer Palettier- oder Palettierstation 22, die einen Teil der erfindungsgemäßen Anordnung gemäß Fig. 1, Fig. 2 und/oder Fig. 3 bildet. Gemäß dieser Ausführungsvarianten werden die zu palettierenden Artikel 16, Stückgüter und/oder Gebinde 18 jeweils auf den parallel verlaufenden Förderstreckenabschnitten 12 und 14 transportiert und erreichen die jeweiligen Auflage- und/oder Förderebenen 52 der ersten Transferstationen 48 in der Beladestation 22 (vgl. Fig. 1) als palettierfähige Artikel- oder Gebindelagen 20. Wie bereits in beschrieben, sind die Transferstationen 48 jeweils unabhängig voneinander und auch unabhängig von den (in Fig. 4 verdeutlichten) jeweils nachgeordneten zweiten Transferstationen 50 in vertikaler Richtung beweglich, was über die motorisch betriebene Aufhängungen und Führungseinrichtungen 62 an der Hubwerksäule 60 gewährleistet ist. Die ersten Transferstationen 48 werden daher in Abstimmung mit den nachgeordneten zweiten Transferstationen 50 in eine passende vertikale Position gebracht, bevor die Lagen 20 jeweils auf die zweiten Transferstationen 50 überschoben werden. Die Förderbewegung der Lagen 20 auf den jeweiligen Auflage- und/oder Förderebenen 52 der ersten und zweiten Transferstationen 48 und 50 kann bspw. über geeignete Horizontalfördereinrichtungen wie Mattenketten, Gliederketten oder auch über absenkbare und parallel zur Förderebene 52 bewegliche Schubbalken erfolgen.

Bis zur zweiten Transferstation 50 erfolgt die Bewegung der Artikel 16, Stückgüter und/oder Gebinde 18 sowie der Gruppierungen 38 und zusammengeschobenen Lagen 20 auf den entsprechenden Förderstreckenabschnitten 12 und 14 jeweils in linearer Förderrichtung 28. Wie es die Figuren 1 bis 3 erkennen lassen, muss nun die weitere Bewegung der Lagen 20 von den zweiten Transferstationen 50 zur mittig angeordneten Auflageebene 63 der Beladestation 24 senkrecht dazu erfolgen, d.h. in den Überschubrichtungen 31a bzw. 31b (vgl. Fig. 1). Zu diesem Zweck sind gemäß Fig. 4 die beiden Auflage- und/oder Förderebenen 52 der zweiten Transferstationen 50 gemeinsam an der Hubwerksäule 60 aufgehängt und gemeinsam in vertikale Richtung beweglich. Außerdem kann jede der beiden zweiten Transferstationen 50 eine endlos umlaufende Förderebene 74 oder einen quer zur Förderrichtung 28 beweglichen Schubbalken o. dgl. aufweisen, der rückseitig an den Lagen 20 angreift und diese in jeweiliger Überschubrichtung 31a bzw. 31b zur Auflageebene 63 der Beladestation 24 schieben kann. In diesem Fall kann vorzugsweise ein vorderseitig an den Lagen 20 angreifender Gegenhaltebalken und/oder Bremsbalken 78 vorhanden sein, der ein Verrutschen oder Kippen der Artikel 16 oder Gebinde 18 der jeweiligen Lage 20 bei deren Verschiebebewegungen verhindern kann. Die endlos umlaufenden Förderebenen 74 können bspw. durch angetriebene Mattenketten gebildet sein.

Weiterhin lässt die Fig. 4 eine Ausführungsvariante der beweglichen Auflagefläche 63 erkennen, welche die beiden zweiten Transferstationen 50 miteinander verbindet. So kann eine zweigeteilte Jalousie 76 in einer Weise angeordnet sein, dass sie unterhalb der jeweiligen zweiten Transferstationen 50 verweilt, die jeweils als Lagenpuffer bzw. als Unterstützungsebenen für die dazwischen angeordnete Beladestation 24 fungieren. Die Jalousie 76 wird also beim Ablegen der Lage 20 in eine Position unterhalb der jeweiligen zweiten Transferstationen 50 bzw. Lagenpuffer (links und rechts) angeordnet. Wie erwähnt, können die Transferstationen 50 selbst aus einer Platte oder einer angetriebenen Mattenkette als umlaufende Förderebenen 74 bestehen. Diese sind jeweils ebenso unabhängig voneinander antreibbar. Bei Ausführung als Platte ist ein Schub und Gegenhaltesystem notwendig, um die Lage 20 vom Lagenpuffer bzw. von den Transferstationen 50 auf die bewegliche Auflagefläche 63 der Beladestation 24 zu überführen, von wo aus sie auf den Beladeplatz 25 bzw. die Palette 54 und auf den Stapel 26 überführt werden kann. Ein optionaler Bremsbalken 78 für die Stabilisierung der Lagen 20 bei ihrer Überschubbewegung kann wechselseitig wirkend mittig angeordnet sein.

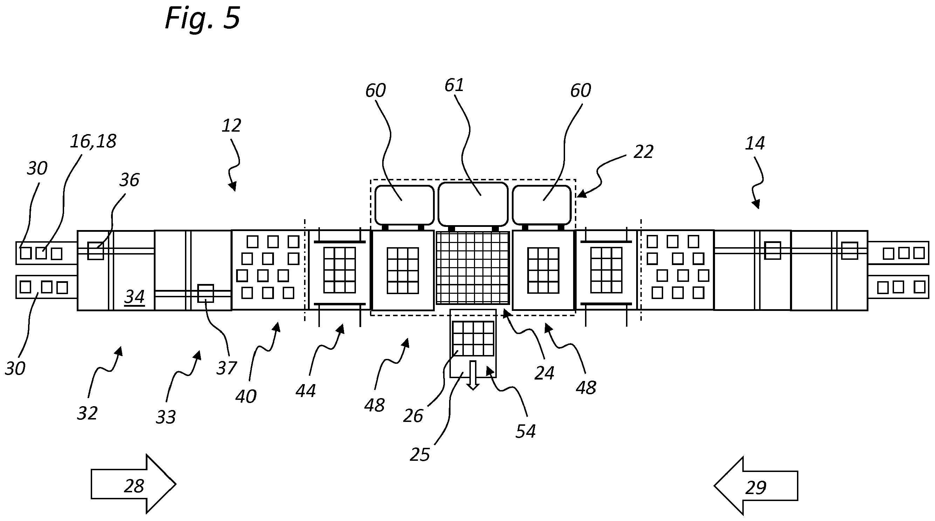

Die schematische Draufsicht der Fig. 5 zeigt eine vierte Ausführungsvariante der erfindungsgemäßen Förder-, Gruppier- und/oder Palettieranordnung 10, bestehend aus zwei in fluchtender Anordnung verlaufenden Förderstreckenabschnitten 12 und 14, die sich mittig an einer gemeinsamen Palettierstation 22 bzw. Beladestation 24 treffen. Wie bei den Varianten gemäß Fig. 2 und Fig. 3 weist jeder der beiden aufeinander zulaufenden Förderstreckenabschnitte 12 und 14 in Förderrichtung 28 bzw. 29 aufeinander folgende Handhabungs-, Gruppier-, Transfer- und/oder Beladestationen auf, die in der integrierten und/oder gemeinsamen Beladestation 24 bzw. Palettierstation 22 münden. Jeweils zwei parallele Transport- oder Zuführbänder 30 zur horizontalen Beförderung der Artikel 16, Stückgüter und/oder Gebinde 18 in Förderrichtung 28 bzw. 29 münden bei jedem der beiden Förderstreckenabschnitte 12 und 14 in der ersten Handhabungsstation 32, mit der die Artikel 16, Stückgüter und/oder Gebinde 18 auf einer Auflageebene 34 verschoben und/oder gedreht werden, bspw. mit einem Portalgreifsystem 36, das schnelle Greif-, Verschiebe- und Drehbewegungen in alle Richtungen innerhalb des Umrisses der Auflageebene 34 erlaubt, um die mit den Zuführbändern 30 regelmäßig oder unregelmäßig, beabstandet voneinander oder lückenlos angeförderten Artikel 16, Stückgüter und/oder Gebinde 18 in der gewünschten Weise drehen und verschieben zu können, so dass jeweils Gruppierungen 38 entstehen, die anschließend zu Artikel- oder Gebindelagen 20 zusammengeschoben und verdichtet werden können. Der ersten Handhabungsstation 32 ist jeweils unmittelbar eine zweite Handhabungsstation 33 nachgeordnet, der wiederum die ersten und zweiten Vorgruppierstationen 40 und 44 folgen bzw. nachgeordnet sind. Der Aufbau und die Konfiguration jedes der Förderstreckenabschnitte 12 und 14 unterscheidet sich insofern nicht von den in den Figuren 2 und 3 gezeigten Konfigurationen der Anordnung 10. Zur besseren Verdeutlichung ist der Bereich der Palettierstation 22 mit einem unterbrochen linierten Kasten gekennzeichnet.

Die in Fig. 5 gezeigten ersten und zweiten Handhabungsstationen 32 und 33, die unmittelbar aufeinander folgen, können bei einer großen Artikel- oder Gebindedichte, die in schneller Folge auf den Zuführ- oder Transportbändern 30 zugeführt werden, für eine schnellere Gruppierung der Artikel 16, Stückgüter oder Gebinde 18 sorgen, da einige der zu drehenden und/oder zu verschiebenden Artikel 16, Stückgüter oder Gebinde 18, die die erste Handhabungsstation 32 ohne Einwirkung passieren, unmittelbar vom Portalgreifsystem 37 der zweiten Handhabungsstation 33 erfasst und verschoben und/oder gedreht werden können. Auf diese Weise lassen sich bei gleichbleibender Fördergeschwindigkeit der Zuführbänder 30 die Verarbeitungsgeschwindigkeit und der Durchsatz der gesamten Anordnung steigern. Wiederum können auch bei der in Fig. 5 gezeigten Variante anstelle der angedeuteten Portalgreifsysteme 36 und 37, die jeweils mit heb- und senkbaren Greifern ausgestattet sind, die jeweils parallel zur Förderrichtung 28 und quer dazu beweglich sind, wahlweise auch Robotergreifer o. dgl. als Handhabungssysteme eingesetzt werden, die bspw. an den Seiten der Auflageebenen 34 stehen und z.B. durch Mehrachsroboter gebildet sein können.

Aufgrund der anderen räumlichen Anordnung der auf die ersten und/oder zweiten Vorgruppierstationen 40 bzw. 44 folgenden ersten Transferstationen 48 weisen diese jeweils eine separate erste Hubwerksäule 60 auf, wodurch sie unabhängig voneinander vertikal beweglich sind. Ebenso weist die dazwischen liegende Beladestation 24 eine separate zweite Hubwerksäule 61 auf, wodurch die Transferstationen 48 und die Beladestation 24 jeweils separat in vertikaler Richtung verstellbar sind. Die Beladestation 24 kann dessen ungeachtet in ihrem Aufbau weitgehend der in Fig. 4 gezeigten Variante entsprechen und wie dort gezeigt mit einer zweiteiligen Jalousie 76 ausgestattet sein, wodurch die jeweils von den Transferstationen 48 in Förderrichtung 28 bzw. 29 kommenden Lagen 20 überführt werden können. Die auf der Jalousie 76 bzw. dessen beweglicher Auflagefläche 63 befindliche Lage 20 kann dann anschließend in passender vertikaler Lage auf den Auslauf des Beladeplatzes 25 bzw. auf den Stapel 26 abgelegt werden, der auf der Palette 54 steht.

Wahlweise kann die Anordnung 10 gemäß Fig. 5 mit zusätzlichen Einrichtungen zur Zuführung von Zwischenlagen zum Beladeplatz 25 gemäß Fig. 2 oder gemäß Fig. 3 ausgestattet sein. Ebenso kann wahlweise an geeigneter Stelle ein Zuführband für Leerpaletten (vgl. Figuren 1 bis 3) vorgesehen sein, mit dem mehrere Leerpaletten zum Beladeplatz 25 befördert werden können, sobald eine Palette 54 mit darauf befindlichem Lagenstapel 26 abtransportiert wurde.

Alle in den Fig. 1 bis Fig. 5 erläuterten Varianten der Anordnung 10 sind jeweils so zu verstehen, dass sämtliche Stationen der Vorrichtung wahlweise mit Transportmitteln (z.B. Mattenketten) oder aber auch mit gleitenden Oberflächen (Tische) versehen sein können. Die Gruppierungen 38 oder Lagen 20 können somit entweder aktiv mittels eines Manipulators verschoben werden, oder aber auch mittels des Fördermittels selbst oder in Kombination beider Förderelemente. Der Übersichtlichkeit wegen sind nicht sämtliche erforderliche Zentriermittel in die Zeichnung eingezeichnet. So kann ggf. zusätzlich noch die Variante existieren, bei der die Zwischenlagen in einer geeigneten Weise auf die Lage 20 am Lagenpuffer in Form eines Klebepunktes angeheftet werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Anordnung, Förderanordnung, Gruppieranordnung, Palettieranordnung
- 12: erster Förderstreckabschnitt
- 14: zweiter Förderstreckabschnitt
- 16: Artikel
- 18: Gebinde
- 20: Lage, Artikellage, Gebindelage, Stückgutlage
- 22: Palettiereinheit, Palettierstation
- 24: Beladestation
- 25: Beladeplatz
- 26: Stapel, Lagenstapel
- 28: Förderrichtung (des ersten und zweiten Förderstreckenabschnittes)
- 29: Förderrichtung (des zweiten Förderstreckenabschnittes)
- 30: Transportband, Zuführband
- 31a: erste Überschubrichtung
- 31b: zweite Überschubrichtung
- 32: Handhabungsstation, erste Handhabungsstation
- 33: zweite Handhabungsstation
- 34: Auflageebene (der Handhabungsstation)
- 36: Portalgreifsystem (der ersten Handhabungsstation)
- 37: Portalgreifsystem (der zweiten Handhabungsstation)
- 38: Gruppierung, Artikelgruppierung, Gebindegruppierung
- 40: erste Vorgruppierstation
- 42: Staubalken
- 44: zweite Vorgruppierstation
- 46: Schubbalken
- 48: erste Transferstation
- 50: zweite Transferstation
- 52: Auflageebene, Förderebene
- 54: Palette
- 56: Leerpalette
- 58: weiteres Zuführband
- 60: Hubwerksäule, erste Hubwerksäule
- 61: Hubwerksäule, zweite Hubwerksäule
- 62: Führungseinrichtungen
- 63: Auflagefläche, Auflageebene (der Beladestation)
- 64: Einrichtung zur Zuführung von Zwischenlagen
- 66: Zwischenlage
- 68: Handhabungseinrichtung
- 70: Handhabungseinrichtung
- 72: Zwischenlagenstapel
- 74: Förderebene, umlaufende Förderebene
- 76: Jalousie, zweigeteilte Jalousie
- 78: Bremsbalken, umlaufende Bremsbalken, Anlagebalken

## Patentansprüche

1. Anordnung (10) mit wenigstens zwei Förderstreckenabschnitten (12, 14) zur Beförderung von Artikeln (16), Stückgütern und/oder Gebinden (18) und/oder von palettierfähigen Artikel-, Stückgut- und/oder Gebindelagen (20), welche Förderstreckenabschnitte (12, 14) jeweils in Förderrichtung (28, 29) aufeinander folgende Handhabungs-, Gruppier- und/oder Transferstationen (32, 33, 40, 44, 48, 50) aufweisen und in einer integrierten und/oder gemeinsamen Beladestation (24) münden, die einen gemeinsamen Beladeplatz (25) zur Stapelung und/oder Palettierung der Artikel-, Stückgut- und/oder Gebindelagen (20) übereinander umfasst, wobei der Beladestation (24) wenigstens zwei Auflage- und/oder Förderebenen (52) zugeordnet sind, die Teile der jeweiligen Transferstationen (48, 50) der wenigstens zwei vorhandenen Förderstreckenabschnitte (12, 14) bilden oder diesen in Förderrichtung (28, 29) nachgeordnet sind, und wobei sich zwischen den Auflage- und/oder Förderebenen (52) der Transferstationen (48, 50) der gemeinsame Beladeplatz (25) befindet, der wechselseitig von den wenigstens zwei Auflage- und/oder Förderebenen (52) mit zu palettierenden Artikel-, Stückgut- und/oder Gebindelagen (20) beaufschlagbar ist, **dadurch gekennzeichnet, dass** die Auflage- und/oder Förderebenen (52) vertikal verstellbar sind.

2. Anordnung nach Anspruch 1, bei welcher der Beladestation (24) mit den wenigstens zwei vertikal verstellbaren Auflage- und/oder Förderebenen (52) wenigstens eine Hubwerksäule (60, 61) mit vertikal verstellbaren Führungseinrichtungen (63) zum unabhängig voneinander durchführbaren Heben und Senken der wenigstens zwei Auflage- und/oder Förderebenen (52) zugeordnet ist.

3. Anordnung nach Anspruch 1 oder 2, bei der die wenigstens zwei Auflage- und/oder Förderebenen (52) mitsamt dem dazwischen befindlichen Beladeplatz (25) in jeweiliger Transportrichtung (28, 29) annähernd miteinander fluchten.

4. Anordnung nach einem der Ansprüche 1 bis 3, bei der die Förderrichtung wenigstens einer der zwei Auflage- und/oder Förderebenen (52) zum Beladeplatz (25) im Wesentlichen senkrecht zu einer Abförderrichtung eines fertig/vollständig palettierten Stapels (26) mehrerer aufeinander abgelegter Artikel-, Stückgut- und/oder Gebindelagen (20) orientiert ist.

5. Anordnung nach einem der Ansprüche 1 bis 3, bei der die Förderrichtung wenigstens einer der Auflage- und/oder Förderebenen (52) zum Beladeplatz (25) im Wesentlichen parallel oder fluchtend zur Abförderrichtung eines fertig/vollständig palettierten Stapels (26) mehrerer aufeinander abgelegter Artikel-, Stückgut- und/oder Gebindelagen (20) orientiert ist.

6. Anordnung nach einem der Ansprüche 1 bis 5, bei der der Beladeplatz (25) wenigstens ein Horizontalförderelement (76) aufweist, das zwischen den wenigstens zwei verstellbaren Auflage- und/oder Förderebenen (52) oszillierend beweglich ist.

7. Anordnung nach Anspruch 6, bei der das wenigstens eine Horizontalförderelement durch eine umlaufende Mattenkette gebildet ist.

8. Anordnung nach Anspruch 6, bei der das wenigstens eine Horizontalförderelement durch ein bewegliches Jalousieelement (76) gebildet ist.

9. Anordnung nach Anspruch 7 oder 8, bei der dem wenigstens einen Horizontalförderelement (76) ein für zwei Überschubrichtungen wechselseitig nutzbares Anlageelement (78) zur Abstützung von überschobenen Artikel-, Stückgut- und/oder Gebindelagen zugeordnet ist.

10. Anordnung nach einem der Ansprüche 1 bis 9, bei der die Auflage- und/oder Förderebenen (52) über Zugmittel wie Riemen an der Hubwerksäule (60, 61) aufgehängt und motorisch an dieser vertikal beweglich angeordnet sind.

11. Anordnung nach einem der Ansprüche 1 bis 10, bei der dem Beladeplatz (25) wenigstens eine Vorrichtung (64, 68, 70) zum Einlegen von Zwischenlagen (66) zwischen jeweils zwei aufeinander gestapelte Artikel-, Stückgut- und/oder Gebindelagen (20) zugeordnet ist.

12. Verfahren zur Beförderung von Artikeln (16), Stückgütern und/oder Gebinden (18) und/oder von palettierfähigen Artikel-, Stückgut- und/oder Gebindelagen (20) innerhalb wenigstens zweier Förderstreckenabschnitte (12, 14) in jeweiliger Förderrichtung (28, 29) mittels aufeinander folgende Handhabungs-, Gruppier- und/oder Transferstationen (32, 33, 40, 44, 48, 50), die in einer integrierten und/oder gemeinsamen Beladestation (24) münden, in der in einem gemeinsamen Beladeplatz (25) die Artikel-, Stückgut- und/oder Gebindelagen (20) übereinander gestapelt und/oder palettiert werden, wobei die Beladestation (24) wenigstens zwei Auflage- und/oder Förderebenen (52) umfasst oder zugeordnet hat, die Teile der jeweiligen Transferstationen (48, 50) der wenigstens zwei vorhandenen Förderstreckenabschnitte (12, 14) bilden oder diesen in Förderrichtung (28, 29) nachgeordnet sind, und wobei sich zwischen den Auflage- und/oder Förderebenen (52) der Transferstationen (48, 50) der gemeinsame Beladeplatz (25) befindet, der wechselseitig von den wenigstens zwei Auflage- und/oder Förderebenen (52) mit zu palettierenden Artikel-, Stückgut- und/oder Gebindelagen (20) beaufschlagt wird, **dadurch gekennzeichnet, dass** die Auflage- und/oder Förderebenen (52) vertikal verstellbar sind.

13. Verfahren nach Anspruch 12, bei dem die beiden Förderstreckenabschnitte (12, 14) miteinander fluchten und sich mit gegensinnig orientierten Förderrichtungen (28, 29) für die Artikel (16), Stückgüter und/oder Gebinde (18) bzw. für die Gruppierungen (38) oder Artikel-, Stückgut- und/oder Gebindelagen (20) mittig in der Beladestation (24) treffen.

14. Verfahren nach Anspruch 12, bei dem die beiden Förderstreckenabschnitte (12, 14) ungefähr parallel verlaufen und sich mit gleichsinnig orientierten Förderrichtungen (28) für die Artikel (16), Stückgüter und/oder Gebinde (18) bzw. für die Gruppierungen (38) oder Artikel-, Stückgut- und/oder Gebindelagen (20) endseitig in der Beladestation (24) treffen.

## Claims

1. An arrangement (10) of at least two conveyor line sections (12, 14) for conveying articles (16), piece goods, and/or bundles (18) and/or palletizable article layers, piece good layers, and/or bundle layers (20), which conveyor line sections (12, 14) have handling stations, grouping stations, and/or transfer stations (32, 33, 40, 44, 48, 50) in each case located consecutively in conveying direction (28, 29) and which conveyor line sections (12, 14) lead into an integrated and/or common loading station (24), which comprises a common loading place (25) for stacking and/or palletizing the article layers, piece good layers, and/or bundle layers (20) on top of each other, wherein at least two support surfaces and/or conveying surfaces (52) are associated with the loading station (24), which support surfaces and/or conveying surfaces (52) form parts of, or are arranged downstream in conveying direction (28, 29) from, the particular transfer stations (48, 50) of the at least two conveyor line sections (12, 14) present, and wherein, located between the support surfaces and/or conveying surfaces (52) of the transfer stations (48, 50), is the common loading place (25), which is suppliable alternately by the at least two support surfaces and/or conveying surfaces (52) with article layers, piece good layers, and/or bundle layers (20) to be palletized, **characterized in that** the support surfaces and/or conveying surfaces (52) are vertically adjustable.

2. The arrangement as recited in claim 1, in which at least one lifting column (60, 61) with vertically adjustable guiding devices (63) for being able to perform the lifting and lowering of the at least two support surfaces and/or conveying surfaces (52) independently of one another is associated with the loading station (24) and with its at least two vertically adjustable support surfaces and/or conveying surfaces (52).

3. The arrangement as recited in claim 1 or 2, in which the at least two support surfaces and/or conveying surfaces (52) together with the loading place (25) located therebetween are approximately aligned with each other in each particular transport direction (28, 29).

4. The arrangement as recited in one of the claims 1 to 3, in which the conveying direction of at least one of the two support surfaces and/or conveying surfaces (52) to the loading place (25) is oriented substantially perpendicular to a removal direction of a finished/completed palletized stack (26) of a plurality of article layers, piece good layers, and/or bundle layers (20) deposited on top of each other.

5. The arrangement as recited in one of the claims 1 to 3, in which the conveying direction of at least one of the two support surfaces and/or conveying surfaces (52) to the loading place (25) is oriented substantially parallel or aligned with the removal direction of a finished/completed palletized stack (26) of a plurality of article layers, piece good layers, and/or bundle layers (20) deposited on top of each other.

6. The arrangement as recited in one of the claims 1 to 5, in which the loading place (25) has at least one horizontal conveying element (76), which is oscillatingly movable between the at least two adjustable support surfaces and/or conveying surfaces (52).

7. The arrangement as recited in claim 6, in which the at least one horizontal conveying element is formed by a circulating modular conveyor belt.

8. The arrangement as recited in claim 6, in which the at least one horizontal conveying element is formed by a movable shutter element (76).

9. The arrangement as recited in claim 7 or 8, in which a contact element (78), which is usable alternately for two transfer directions, is associated with the at least one horizontal conveying element (76) for the purpose of supporting transferred article layers, piece good layers, and/or bundle layers.

10. The arrangement as recited in one of the claims 1 to 9, in which the support surfaces and/or conveying surfaces (52) are suspended by way of traction means, such as straps, from the lifting column (60, 61) and are arranged thereat to be vertically motormovable.

11. The arrangement as recited in one of the claims 1 to 10, in which at least one apparatus (64, 68, 70) is associated with the loading place (25) for the purpose of depositing intermediate layers (66) between in each case two article layers, piece good layers, and/or bundle layers (20), which are stacked upon each other.

12. A method for conveying articles (16), piece goods, and/or bundles (18) and/or palletizable article layers, piece good layers, and/or bundle layers (20) within at least two conveyor line sections (12, 14) in each particular conveying direction (28, 29) by means of consecutive handling stations, grouping stations, and/or transfer stations (32, 33, 40, 44, 48, 50), which conveyor line sections (12, 14) lead into an integrated and/or common loading station (24), in which the article layers, piece good layers, and/or bundle layers (20) are stacked on top of each other and/or palletized in a common loading place (25), wherein at least two support surfaces and/or conveying surfaces (52) are comprised by or associated with the loading station (24), which support surfaces and/or conveying surfaces (52) form parts of, or are arranged downstream in conveying direction (28, 29) from, the particular transfer stations (48, 50) of the at least two conveyor line sections (12, 14) present, and wherein, located between the support surfaces and/or conveying surfaces (52) of the transfer stations (48, 50), is the common loading place (25), which is supplied alternately by the at least two support surfaces and/or conveying surfaces (52) with article layers, piece good layers, and/or bundle layers (20) to be palletized, **characterized in that** the support surfaces and/or conveying surfaces (52) are vertically adjustable.

13. The method as recited in claim 12, in which the two conveyor line sections (12, 14) are aligned with each other and meet centrally in the loading station (24) with oppositely oriented conveying directions (28, 29) for the articles (16), piece goods, and/or bundles (18), or, as the case may be, for the groupings (38) or article layers, piece good layers, and/or bundle layers (20).

14. The method as recited in claim 12, in which the two conveyor line sections (12, 14) run approximately parallel and meet at the end of the loading station (24) with identically oriented conveying directions (28) for the articles (16), piece goods, and/or bundles (18), or, as the case may be, for the groupings (38) or article layers, piece good layers, and/or bundle layers (20).

## Revendications

1. Ensemble (10) comprenant au moins deux sections de trajet de transport (12, 14) pour transporter des articles (16), des produits de détail et/ou des multipacks (18) et/ou des couches palettisables d'articles, de produits de détail et/ou de multipacks (20), lesquelles sections de trajet de transport (12, 14) présentent des postes successifs -respectivement dans la direction de transport (28, 29)- de manipulation, de groupement et/ou de transfert (32, 33, 40, 44, 48, 50) et débouchent sur un poste de chargement (24) intégré et/ou commun qui comprend un emplacement de chargement (25) commun pour empiler et/ou palettiser les couches d'articles, de produits de détail et/ou de multipacks (20) les unes au-dessus des autres, dans lequel audit poste de chargement (24) sont associés au moins deux plans d'appui et/ou de transport (52) qui forment des parties des postes de transfert (48, 50) respectifs desdites au moins deux sections de trajet de transport (12, 14) existantes ou qui sont montés en aval de celles-ci dans la direction de transport (28, 29), et dans lequel ledit emplacement de chargement (25) commun est situé entre les plans d'appui et/ou de transport (52) des postes de transfert (48, 50) et peut être alimenté alternativement depuis lesdits au moins deux plans d'appui et/ou de transport (52) en couches d'articles, de produits de détail et/ou de multipacks (20) à palettiser, **caractérisé par le fait que** les plans d'appui et/ou de transport (52) sont réglables verticalement.

2. Ensemble selon la revendication 1, dans lequel audit poste de chargement (24) comprenant lesdits au moins deux plans d'appui et/ou de transport (52) réglables verticalement est associée au moins une colonne de mécanisme de levage (60, 61) ayant des dispositifs de guidage (63) réglables verticalement et destinés à faire monter et descendre lesdits au moins deux plans d'appui et/ou de transport (52) ce qui peut être réalisé indépendamment l'un de l'autre.

3. Ensemble selon la revendication 1 ou 2, dans lequel lesdits au moins deux plans d'appui et/ou de transport (52) conjointement avec l'emplacement de chargement (25) situé entre eux sont approximativement alignés dans la direction de transport (28, 29) respective.

4. Ensemble selon l'une quelconque des revendications 1 à 3, dans lequel la direction de transport d'au moins l'un des deux plans d'appui et/ou de transport (52) vers l'emplacement de chargement (25) est orientée pour l'essentiel perpendiculairement à une direction d'évacuation d'une pile (26) finalement/entièrement palettisée de plusieurs couches superposées d'articles, de produits de détail et/ou de multipacks (20).

5. Ensemble selon l'une quelconque des revendications 1 à 3, dans lequel la direction de transport de l'un au moins des plans d'appui et/ou de transport (52) vers l'emplacement de chargement (25) est orientée pour l'essentiel parallèlement ou en alignement par rapport à la direction d'évacuation d'une pile (26) finalement/entièrement palettisée de plusieurs couches superposées d'articles, de produits de détail et/ou de multipacks (20).

6. Ensemble selon l'une quelconque des revendications 1 à 5, dans lequel l'emplacement de chargement (25) présente au moins un élément de transport horizontal (76) qui est déplaçable de manière oscillante entre lesdits au moins deux plans d'appui et/ou de transport (52) réglables.

7. Ensemble selon la revendication 6, dans lequel ledit au moins un élément de transport horizontal est formé par une chaîne à tapis circulante.

8. Ensemble selon la revendication 6, dans lequel ledit au moins un élément de transport horizontal est formé par un élément de jalousie (76) mobile.

9. Ensemble selon la revendication 7 ou 8, dans lequel audit au moins un élément de transport horizontal (76) est associé un élément d'appui (78) utilisable alternativement pour deux directions de transfert et destiné à supporter des couches d'articles, de produits de détail et/ou de multipacks transférées.

10. Ensemble selon l'une quelconque des revendications 1 à 9, dans lequel les plans d'appui et/ou de transport (52) sont suspendus sur ladite colonne de mécanisme de levage (60, 61) par l'intermédiaire de moyens de traction, tels que courroies, et sont disposés de manière à être déplaçables verticalement par moteur sur celle-ci.

11. Ensemble selon l'une quelconque des revendications 1 à 10, dans lequel audit emplacement de chargement (25) est associé au moins un dispositif (64, 68, 70) pour insérer des couches intermédiaires (66) entre respectivement deux couches empilées d'articles, de produits de détail et/ou de multipacks (20).

12. Procédé de transport d'articles (16), de produits de détail et/ou de multipacks (18) et/ou de couches d'articles, de produits de détail et/ou de multipacks (20) palettisables à l'intérieur d'au moins deux sections de trajet de transport (12, 14) dans la direction de transport (28, 29) respective au moyen de postes successifs de manipulation, de groupement et/ou de transfert (32, 33, 40, 44, 48, 50) qui débouchent sur un poste de chargement (24) intégré et/ou commun dans lequel, sur un emplacement de chargement (25) commun, les couches d'articles, de produits de détail et/ou de multipacks (20) sont empilées et/ou palettisées, dans lequel le poste de chargement (24) comprend au moins deux plans d'appui et/ou de transport (52), ou ceux-ci lui sont associés, qui forment des parties des postes de transfert (48, 50) respectifs desdites au moins deux sections de trajet de transport (12, 14) existantes ou qui sont montés en aval de celles-ci dans la direction de transport (28, 29), et dans lequel ledit emplacement de chargement (25) commun est situé entre les plans d'appui et/ou de transport (52) des postes de transfert (48, 50) et est alimenté alternativement depuis lesdits au moins deux plans d'appui et/ou de transport (52) en couches d'articles, de produits de détail et/ou de multipacks (20) à palettiser, **caractérisé par le fait que** les plans d'appui et/ou de transport (52) sont réglables verticalement.

13. Procédé selon la revendication 12, dans lequel les deux sections de trajet de transport (12, 14) sont alignées entre elles et se rencontrent au milieu dans le poste de chargement (24), en ayant des directions de transport (28, 29) orientées en sens opposé pour les articles (16), produits de détail et/ou multipacks (18) ou bien pour les groupements (38) ou les couches d'articles, de produits de détail et/ou de multipacks (20).

14. Procédé selon la revendication 12, dans lequel les deux sections de trajet de transport (12, 14) s'étendent à peu près parallèlement et se rencontrent à l'extrémité dans le poste de chargement (24), en ayant des directions de transport (28) orientées dans le même sens pour les articles (16), produits de détail et/ou multipacks (18) ou bien pour les groupements (38) ou les couches d'articles, de produits de détail et/ou de multipacks (20).
